# EUROPEAN PATENT APPLICATION

(11) **EP 2 608 017 A1**
(43) Date of publication of application: **26.06.2013**
(21) Application number: 11194799.0
(22) Date of filing: 21.12.2011
(51) Int. Cl.: G06F 9/44

(54) **Method for modifying the look and behavior of a web application**

(71) Applicant: Siemens Aktiengesellschaft, 80333 München (DE)
(72) Inventor: Camera, Fabrizio, 15069 Serravalle Scrivia (IT)
(74) Representative: Fischer, Michael

(57) **Abstract**

In order to integrate two or more different web applications to look like one coherent set a first request (R1) is provided from a web client (C) to a first application (A). A second request (R2) is provided to a second application (B). The second request (R2) is intercepted by means of a software module (M). The second request (R2) is recognized to be related to the first application (A). Information is extracted from the second request (R2) by the software module (M). The information is used to configure the second application (B) to look and/or behave like the first application.

## Description

The present invention relates to the technical field of modifying the look and behavior of a web application.

Up to now the problem of integrating two or more different web applications to look like one coherent set has been solved by means of custom developments and application modifications made ad-hoc. This practice is time consuming and error prone and can lead to slightly different solutions each time; in short, this is not maintainable. The challenge is particularly high to integrate the web applications to look like one coherent set when the involved web applications aren't built foreseeing this kind of integration. Moreover, integrating two or more different web applications to look like one coherent set can only be done when the original source code is available and when it is acceptable for the project and product life cycle to modify it.

It is therefore the objective of the present invention to satisfy the need of integrating two or more different web applications to look like one coherent set.

This objective is solved by the measures taken in accordance with the independent claims.

In order to satisfy the need of integrating two or more different web applications to look like one coherent set, a method for modifying the look and behavior of a web application comprises a step of providing a first request from a web client to a first application. Furthermore, a second request is provided to a second application. The second request is intercepted by means of a software module. The software module is adapted to recognize the second request to be related to the first application. The information is extracted from the second request by the software module. This information is used in order to configure the second application to look and/or behave like the first application.

According to another aspect of the invention, a system comprises means for performing the steps of the method.

The independent claims propose preferred embodiments.

The invention is in the following described on the basis of the figures which describe a preferred embodiment.

Figure 1 shows a block diagram of a manufacturing execution system according to a preferred embodiment of the invention.

Figure 2 shows a sequence diagram of a user activity including the interaction with the first application and the second application describing the embodiment of figure 1 in further detail.

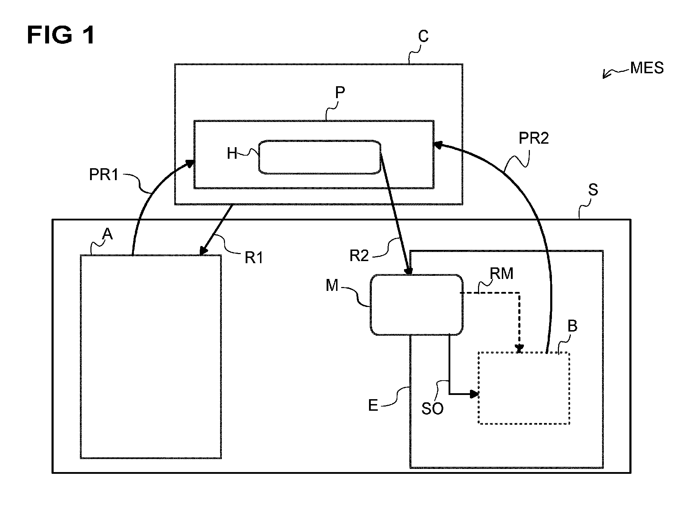

Figure 1 shows a block diagram of the user interface (UI) layer of a manufacturing execution system MES according to a preferred embodiment of the invention. The manufacturing execution system MES comprises a first application A, a second application B, a web client C, and a software module M. The software module M and the second application B are able to operate together as an application compound E. Furthermore the program module M is able to operate together with other applications, e.g. application A, as an application compound E. The first application A and the second application B are comprised by a web server S or by a web server network.

According to the embodiment, in order to modify the look and behavior of the second web application B, a first request R1 from the web client C is sent to the first application A. The application A then renders a content C1 in a page rendering step PR1 to the web client C which displays the content C1 in web page P. Upon actuation of a hyperlink H that is displayed on the web page P, the web client C provides a second request R2 to the application compound E and/or to the second application B. This is done with a hypertext transfer protocol (HTTP) request to a uniform resource locator (URL). The second request R2 is intercepted by means of the software module M. The software module M is adapted to recognize the second request R2 to be related to the first application A. Information is extracted from the second request R2 by the software module M. This information is used in order to configure the second application B to look and/or behave like the first application. In order to achieve this, the software module M provides a modified http-request RM to the second application B and/or the software module M overrides settings of the application B by sending a command message SO to the web application B. In a page rendering step PR2, content C2 is then rendered from the application B to the web client C, where the content C2 is displayed with a look and/or feel like the content of the first application A.

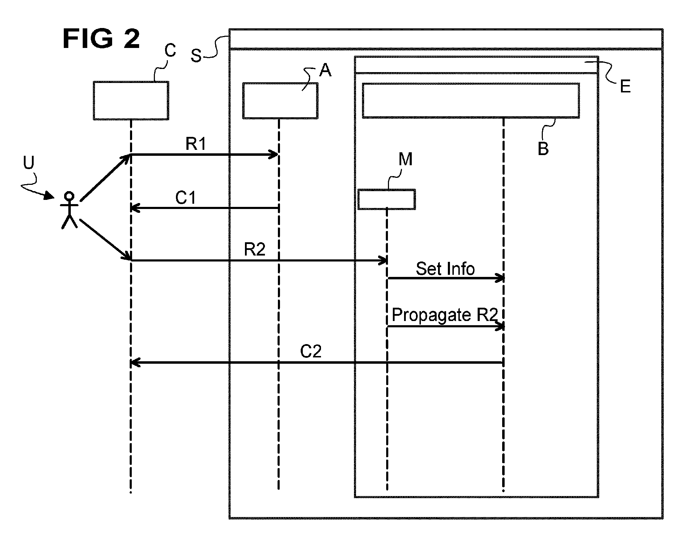

Figure 2 shows a sequence diagram of a user activity including the interaction with the application A and the application B where application A is the entry point. A user U sends the request R1 to the application A using the web client C. The application A responds by sending content C1 together with some usual metadata. The user U sends the request R2 to the application B. The request R2 is intercepted by the application compound E and in particular by the module M. If the module M decides that the request R2 is to be processed to obtain the "integrated" behavior, it changes accordingly the settings of application B. Then the module M propagates the request R2 to application B. Application B processes the request R2 according to the modified settings and sends a response with the content C2 to the web client C. The user now can see the content C2 in a way that appears and/or behaves similar to the content C1 of application A.

In a preferred embodiment, the focus is on making the web applications A and B look similar by sharing some user setting among them.

According to a preferred embodiment, the second request is generated by the first application A. This involves the advantage that no separate request needs to be generated by a user. Moreover, this solution provides for automatic integration of the second application B into the first application A.

According to another preferred embodiment a web page P is transmitted and displayed on the client device C as a reaction of the first request R1, wherein the web page P provides a hyperlink H, and wherein the second request R2 is generated upon actuation of the hyperlink H. This provides a solution for integrating the second application B into the first application A, while still providing the possibility to the user U to decide if the second application B should be started up or not.

According to another preferred embodiment the look and/or behavior of the second application B is modified without modifying code, and more preferably, without modifying the code of the second application B. This way, the need of integrating two or more different web applications to look like one coherent set can be satisfied with little effort.

According to another preferred embodiment the first application A and/or the second application B exposes a settings Application Programming Interface (API) adapted to modify the look and/or behavior of the second application B. This solution involves the advantage that the source code of the second application needs not to be amended in order to integrate the applications A and B to look like one coherent set.

According to another preferred embodiment the module M provides a modified request to the second application based on the extracted information in order to configure the second application B to look and/or behave like the first application. This solution involves the advantage that the second application B and/or settings of the second application B do not need to be amended.

According to another preferred embodiment the first application A and/or the second application B exposes a settings repository in order to modify the look and/or behavior of the second application. This solution involves the advantage that only the settings need to be adapted in order for the application A and B to look like one coherent set. This objective can be for example achieved without the need of complex programming by the module M overriding settings of the second application B in order to configure the second application B to look and/or behave like the first application.

According to another preferred embodiment the software module M comprises a Dynamic Link Library (DLL) or some other packaged solution involving a library.

According to another preferred embodiment after using the extracted information from the second request R2 in order to configure the second application B to look and/or behave like the first application A, other requests are processed according to default settings of the second application B. This will provide the second application B its original look and/or behavior if this is desired.

According to another preferred embodiment, in order to minimize the programming effort, the source code of the first application A and/or the source code of the second application B remains unchanged.

According to another preferred embodiment a web page P is called up by the web client C due to the receipt of the first request R1 by the first application A, and the configuring of the second application B to look and/or behave like the first application A involves providing content to the web page P with the same look and feel. This way content from the applications A and B can be integrated into the same web page with the same look and feel.

According to another preferred embodiment, due to the receipt of the first request R1 by the first application A, a web page P is called up by the web client C, and the configuring of the second application B to look and/or behave like the first application A involves providing content to a different web page with the same look and feel as the web page P. This way, several web pages with a coherent look and feel can be generated in a simple way with content from both of the applications A and B.

Preferably embodiments of the inventive method are performed by a system that comprises means for performing the steps of the method according to one of the preceding claims. Preferably the system is a manufacturing execution system (MES).

To provide an end-user solution, it is sometimes needed to integrate two or more different web applications. If they weren't developed according to this requirement, probably they do not present the feature needed to compose them without touching their code. Often the required integration has the objective of presenting to the end user the set of applications as if they were just one. This means both look likeness and feel likeness is needed. According to a preferred embodiment is assumed that the involved applications expose some kind of "settings API" or rely on some settings repository in order to work.

The proposed solution is based on the creation of a software module that will intercept the requests incoming in the second application which is in the following also called target application. It will recognize the request as coming from the other paired application. It can do this by looking at the URL (but not limited to this technical detail). Once it recognizes the request as an "integrated" one, it can extract from the request all the available information and use the extracted information to further configure the target application. After this step it can "clean" again the request URL and associated data (if needed) and pass back the control of the execution pipeline to the target application which will serve the request as usual. In other words, the interposed module can intercept and interpret "signals" in order to influence the execution of the assisted application.

The advantage and the main characteristic of the proposed solution is that the two involved applications need to be modified just in term of configuration: the source code remains untouched. This fact implies that there is no need to re-compile and to re-deploy the applications. The advantage is also the creation of a "standard" and known solution to the problem to be reused when needed. This minimizes the risk of incomplete or plain wrong solutions usually developed ad-hoc in order to mitigate the need.

With further reference to figure 1, is a schema of the solution, where Application B must be integrated with Application A. The module is loaded thanks to usual module loading in web applications (i.e. late binding through configuration files). It takes part on the early steps of the execution pipeline and, by running "inside" the application it can exploit every public interface or convention to change the behavior of the host application.

### List of reference signs.

- A: first application
- B: second application
- C: web client
- C1: Content
- C2: Content
- E: application compound
- H: hyperlink
- M: software module
- MES: manufacturing execution system
- P: web page
- PR1: page rendering step
- PR2: page rendering step
- R1: first request
- R2: second request
- RM: modified http-request; modified request
- S: web server
- SO: command message
- U: user

## Claims

1. Method for modifying the look and behavior of a web application comprising the steps of:
- providing a first request (R1) from a web client (C) to a first application (A);
- providing a second request (R2) to a second application (B);
**characterized by** the steps of:
- intercepting the second request (R2) by means of a software module (M);
- recognizing by the software module (M) the second request (R2) to be related to the first application (A);
- extracting information from the second request (R2) by the software module (M) and use this information in order to configure the second application (B) to look and/or behave like the first application.

2. The method of claim 1,
**characterized in that**
the second request (R2) is generated by the first application (A).

3. The method of any one of the preceding claims,
**characterized in that**
a web page (P) is transmitted and displayed on the client device (C) as a reaction of the first request (R1), wherein the web page (P) provides a hyperlink (H), and wherein the second request (R2) is generated upon actuation of the hyperlink (H).

4. The method of any one of the preceding claims,
**characterized in that**
the look and/or behavior of the second application (B) is modified without modifying the code of the second application (B).

5. The method of any one of the preceding claims,
**characterized in that**
the first application (A) and/or the second application (B) exposes a settings Application Programming Interface (API) adapted to modify the look and/or behavior of the second application (B).

6. The method of any one of the preceding claims,
**characterized in that**
the module (M) provides a modified request to the second application based on the extracted information in order to configure the second application (B) to look and/or behave like the first application.

7. The method of any one of the preceding claims,
**characterized in that**
the first application (A) and/or the second application (B) exposes a settings repository in order to modify the look and/or behavior of the second application.

8. The method of any one of the preceding claims,
**characterized in that**
the module (M) overrides settings of the second application (B) in order to configure the second application (B) to look and/or behave like the first application.

9. The method of any one of the preceding claims,
**characterized in that**
the software module (M) comprises a Dynamic Link Library (DLL).

10. The method of any one of the preceding claims,
**characterized in that**
after using the extracted information from the second request (R2) in order to configure the second application (B) to look and/or behave like the first application (A), processing other requests as according to default settings of the second application (B).

11. The method of any one of the preceding claims,
**characterized in that**
the source code of the first application (A) and/or the source code of the second application (B) remains unchanged.

12. The method of any one of the preceding claims,
**characterized in that**
due to the receipt of the first request (R1) by the first application (A), a web page (P) is called up by the web client (C) and that the configuring of the second application (B) to look and/or behave like the first application (A) involves providing content to the web page (P) with the same look and feel.

13. The method of any one of the preceding claims,
**characterized in that**
due to the receipt of the first request (R1) by the first application (A), a web page (P) is called up by the web client (C) and that the configuring of the second application (B) to look and/or behave like the first application (A) involves providing content to a different web page with the same look and feel as the web page (P).

14. System comprising means for performing the steps of the method according to one of the preceding claims.

15. System according to claim 13, wherein the system is a manufacturing execution system (MES).
